# EUROPEAN PATENT APPLICATION

(11) **EP 4 831 239 A1**
(43) Date of publication of application: **28.10.2026**
(21) Application number: 25869586.5
(22) Date of filing: 15.09.2025
(51) Int. Cl.: C08L 23/14, C08L 23/0807, C08L 23/12, C08L 23/06, H01B 3/44

(54) **POLYPROPYLENE-BASED INSULATING MATERIAL, AND PREPARATION METHOD THEREFOR AND USE THEREOF**

(30) Priority: 03.03.2025 CN 202510243894
(71) Applicant: Electric Power Research Institute. China Southern Power Grid, Guangzhou, Guangdong 510663 (CN)
(72) Inventor: HOU, Shuai, Guangzhou, Guangdong 510663 (CN); ZHAN, Yunpeng, Guangzhou, Guangdong 510663 (CN); FU, Mingli, Guangzhou, Guangdong 510663 (CN); JIA, Lei, Guangzhou, Guangdong 510663 (CN); HUI, Baojun, Guangzhou, Guangdong 510663 (CN); FENG, Bin, Guangzhou, Guangdong 510663 (CN); ZHU, Wenbo, Guangzhou, Guangdong 510663 (CN); LIU, Jie, Guangzhou, Guangdong 510663 (CN); CHEN, Yun, Guangzhou, Guangdong 510663 (CN)
(74) Representative: Hoffmann Eitle
(86) International application number: PCT/CN2025/121401
(87) International publication number: WO 2026/184060

(57) **Abstract**

The present application relates to a polypropylene-based insulating material, a preparation method thereof, and an application thereof. The preparation method includes S1: melt blending polypropylene, polyethylene, a photoinitiator, a bridging auxiliary agent, and an antioxidant; and S2: subjecting the melt-blended mixture to chain regulation under ultraviolet irradiation to obtain the insulating material.

## Description

### RELATED APPLICATION

The present application claims priority to Chinese Patent Application No. 202510243894.5, filed on March 3, 2025, titled "POLYPROPYLENE-BASED INSULATING MATERIAL, AND PREPARATION METHOD AND APPLICATION THEREOF", the entire content of which is incorporated herein by reference.

### TECHNICAL FIELD

The present application relates to the technical field of composite materials, and in particular to a polypropylene-based insulating material, a preparation method thereof, and an application thereof.

### BACKGROUND

In recent years, with the continuous advancement of the carbon peaking and carbon neutrality goals, thermoplastic polypropylene cable materials, which possess recyclable characteristics, have entered a promotion and application stage, and are gradually replacing thermosetting cross-linked polyethylene (XLPE) as the primary insulating material for power cables. Compared with thermosetting cross-linked polyethylene, polypropylene-insulated cables not only exhibit excellent electrical performance, but also eliminate the cross-linking and degassing steps during the manufacturing process, significantly reducing energy consumption and offering good recyclability. However, regardless of polypropylene homopolymer or polypropylene copolymer material incorporating a small amount of ethylene segments, polypropylene materials with propylene as the main structural unit all have the characteristic of high polymer chain regularity. The resulting cable insulating material has high hardness and low-temperature brittleness, and its direct current (DC) performance cannot meet the requirements of high-voltage direct current cables, thus limiting its application in the field of cable insulation.

### SUMMARY

The present application is proposed based on the above issues, and an objective of the present application is to provide a polypropylene-based insulating material, a preparation method thereof, and an application thereof. The insulating material has excellent mechanical properties and direct current electrical performance, meeting the material requirements for high-voltage direct current cables.

To achieve the above objective, a first aspect of the present application provides a method for preparing a polypropylene-based insulating material, including:
S1: melt blending polypropylene, polyethylene, a photoinitiator, a bridging auxiliary agent, and an antioxidant; and
S2: subjecting the melt-blended mixture to chain regulation under ultraviolet irradiation to obtain the polypropylene-based insulating material.

In the above preparation method of the present application, polypropylene, polyethylene, the photoinitiator, the bridging auxiliary agent, and the antioxidant are melt blended, followed by ultraviolet irradiation. The ultraviolet irradiation initiates free radicals, causing the polypropylene phase and the polyethylene phase in the insulating material to be connected via the bridging auxiliary agent through covalent bonds. This achieves covalent bonding between the polypropylene and polyethylene macromolecular chains, thereby enhancing the interphase interaction strength, increasing the molecular weight of the insulating material, effectively suppressing phase separation issues caused by differences in crystallization kinetics, consequently significantly improving the stress-strain characteristics and tensile properties of the insulating material, and ultimately enhancing the mechanical and physical properties as well as the direct current electrical performance of the insulating material. The present application successfully introduces polyethylene to modify the polypropylene-based insulating material, which not only reduces the hardness and increases the toughness of the insulating material, but also solves the problem of poor compatibility between polypropylene and polyethylene. Additionally, a large number of deep traps are introduced into the insulating material by the bridging auxiliary agent, which can reduce the conduction current of the insulating material and inhibit the accumulation of space charges under high electric fields, thereby further improving the direct current electrical performance of the insulating material. The molecular chains of the insulating material are regulated by the above preparation method, and the resulting insulating material remains a thermoplastic material without gel formation, not affecting its processing or recycling. The viscosity of the chain-reconstructed insulating material prepared by the above preparation method is also significantly increased, meeting the requirements for the extrusion of thick insulating layers. The melting temperature of the insulating material prepared by the above method is higher than 90 °C, eliminating the introduction of elastomers, improving the long-term reliability of the insulating material at working temperatures, and significantly reducing the cost of the insulating material.

In some embodiments, in S2, the ultraviolet irradiation is carried out for a time period in a range from 0.5 seconds (s) to 10 s.

In some embodiments, based on parts by mass, polypropylene is present in an amount of 40 to 90 parts, polyethylene is present in an amount of 10 to 60 parts, the photoinitiator is present in an amount of 0.1 to 0.6 parts, the bridging auxiliary agent is present in an amount of 0.1 to 1.0 parts, the antioxidant is present in an amount of 0.3 to 1.5 parts, and polypropylene and polyethylene are present in a total amount of 100 parts by mass.

In some embodiments, based on parts by mass, polypropylene is present in an amount of 50 to 60 parts, polyethylene is present in an amount of 40 to 50 parts, the photoinitiator is present in an amount of 0.3 to 0.6 parts, the bridging auxiliary agent is present in an amount of 0.2 to 0.6 parts, the antioxidant is present in an amount of 0.3 to 0.5 parts, and polypropylene and polyethylene are present in a total amount of 100 parts by mass.

In some embodiments, the method for preparing a polypropylene-based insulating material meets at least one of the following conditions:
(1) the bridging auxiliary agent includes at least one of trimethylolpropane trimethacrylate, ethoxylated trimethylolpropane triacrylate, or triallyl isocyanurate;
(2) the photoinitiator includes at least one of benzophenone, 2,4-dihydroxybenzophenone, or Michler's ketone;
(3) polypropylene includes at least one of polypropylene homopolymer or polypropylene copolymer, and polypropylene has a melt index in a range from 1.8 g/10 min to 2.4 g/10 min at a temperature of 230 °C under a load of 2.16 kg; or
(4) polyethylene includes at least one of low-density polyethylene or linear low-density polyethylene, and polyethylene has a melt index in a range from 1.6 g/10 min to 2.2 g/10 min at a temperature of 190 °C under a load of 2.16 kg.

In some embodiments, the method for preparing a polypropylene-based insulating material further includes subjecting the melt-blended mixture to hot press molding at a temperature in a range from 190 °C to 220 °C and a pressure in a range from 5 MPa to 20 MPa after the melt blending and before the ultraviolet irradiation.

In some embodiments, the melt blending meets at least one of the following conditions:
(1) the melt blending is carried out at a temperature in a range from 180 °C to 200 °C;
(2) a rotating speed of a blending equipment for the melt blending is in a range from 40 r/min to 60 r/min; or
(3) the melt blending is carried out for a time period in a range from 10 min to 20 min.

A second aspect of the present application provides a polypropylene-based insulating material prepared by the method for preparing a polypropylene-based insulating material of the first aspect of the present application.

A third aspect of the present application provides an insulating article including the polypropylene-based insulating material prepared by the method of the first aspect of the present application, or the polypropylene-based insulating material of the second aspect of the present application.

A fourth aspect of the present application provides a cable including the polypropylene-based insulating material prepared by the method of the first aspect of the present application, or the polypropylene-based insulating material of the second aspect of the present application.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a graph showing the results of stress-strain tests of the insulating materials prepared in Examples 1 to 3 and Comparative Examples 1 to 2.
FIG. 2 is a chart showing the results of hardness tests of the insulating materials prepared in Examples 1 to 3 and Comparative Examples 1 to 2.
FIG. 3 is a chart showing the results of melt index tests of the insulating materials prepared in Examples 1 to 3 and Comparative Examples 1 to 2.
FIG. 4 is a graph showing the results of conduction current tests of the insulating materials prepared in Examples 1 to 3 and Comparative Examples 1 to 2.
FIG. 5 is a graph showing the results of space charge distribution test of the insulating material prepared in Example 1.
FIG. 6 is a graph showing the results of space charge distribution test of the insulating material prepared in Example 2.
FIG. 7 is a graph showing the results of space charge distribution test of the insulating material prepared in Example 3.
FIG. 8 is a graph showing the results of space charge distribution test of the insulating material prepared in Comparative Example 2.
FIG. 9 is a graph showing the results of space charge distribution test of the insulating material prepared in Comparative Example 1.

### DETAILED DESCRIPTION

To facilitate understanding of the present application, the present application will be described completely below with reference to the relevant accompanying drawings. Preferred embodiments of the present application are shown in the accompanying drawings. However, the present application may be implemented in many different forms and is not limited to the embodiments described herein. Conversely, these embodiments are provided to make the understanding of the application of the present application more thorough and comprehensive.

Unless otherwise defined, all technical and scientific terms used herein have the same meaning as commonly understood by one of ordinary skill in the technical field to which the present application belongs. The terms used in the specification of the present application are for the purpose of describing specific embodiments only and are not intended to limit the present application. As used herein, the term "and/or" includes any and all combinations of one or more of the associated listed items.

In the field of cable insulating materials, compared with thermosetting cross-linked polyethylene insulating materials, polypropylene insulating materials not only exhibit excellent electrical performance but also eliminate the cross-linking and degassing steps during the manufacturing process, significantly reducing energy consumption and offering good recyclability. However, regardless of polypropylene homopolymer insulating material or polypropylene copolymer insulating material incorporating a small amount of ethylene segments, polypropylene insulating materials with propylene as the main structural unit all suffer from high chain regularity, and the resulting insulating materials has high hardness and poor low-temperature brittleness, thus limiting the application of polypropylene materials in the field of cable insulation.

Currently, polypropylene insulating materials are commonly modified for increasing toughness by blending, where a low-modulus elastomer is introduced into the polypropylene insulating material to reduce hardness of the material and provide better flexibility. However, the common modifying materials for toughening polypropylene, such as ethylene-propylene copolymers, ethylene-octene copolymers, etc., face challenges in the modification of polypropylene direct current cable materials: Firstly, the crystalline melting temperatures of these materials are generally below 90 °C. As a result, the elastomer exists in a molten state during long-term operation of cable, leading to deteriorated electrical insulation reliability and questionable long-term operational stability. Secondly, the elastomer is expensive, resulting in persistently high-costs for polypropylene cables, significantly hindering the widespread application of such products. Thirdly, a large amount of catalyst residues remain within the elastomer material during the synthesis of elastomer, resulting in poor space charge and conductivity characteristics, and unsatisfactory DC electrical performance.

Because low-density polyethylene and linear low-density polyethylene have melting temperatures above 90 °C, relatively low cost, and can achieve very high purity during their synthesis, some researchers have proposed blending polyethylene with polypropylene to address the aforementioned issues. However, in practical application, it has been found that the compatibility between polyethylene and polypropylene is very poor, and the blended materials will form noticeable interfacial boundaries during cooling due to the difference in the crystallization kinetics between the two phases, leading to significant deterioration of the mechanical and physical properties of the blended materials. Additionally, the numerous interfaces within the material lead to carrier transport and space charge accumulation, rendering the direct current electrical performance of the resulting blended material insufficient for the requirements of high-voltage direct current cables.

Based on this, an embodiment of the present application provides a method for preparing a polypropylene-based insulating material, including:
S1: melt blending polypropylene, polyethylene, a photoinitiator, a bridging auxiliary agent, and an antioxidant; and
S2: subjecting the melt-blended mixture to chain regulation under ultraviolet irradiation to obtain the polypropylene-based insulating material.

In the present application, polypropylene, polyethylene, the photoinitiator, the bridging auxiliary agent, and the antioxidant are melt blended, followed by ultraviolet irradiation. The ultraviolet irradiation initiates free radicals, causing the polypropylene phase and the polyethylene phase in the insulating material to be connected via the bridging auxiliary agent through covalent bonds. This achieves covalent bonding between the polypropylene and polyethylene macromolecular chains, thereby enhancing the interphase interaction strength, increasing the molecular weight of the insulating material, effectively suppressing phase separation issues caused by differences in crystallization kinetics, consequently significantly improving the stress-strain characteristics and tensile properties of the insulating material, and ultimately enhancing the mechanical and physical properties as well as the direct current electrical performance of the insulating material. The present application successfully introduces polyethylene to modify the polypropylene-based insulating material, which not only reduces the hardness and increases the toughness of the insulating material, but also solves the problem of poor compatibility between polypropylene and polyethylene. Additionally, a large number of deep traps are introduced into the insulating material by the bridging auxiliary agent, which can reduce the conduction current of the insulating material and inhibit the accumulation of space charges under high electric fields, thereby further improving the direct current electrical performance of the insulating material. The molecular chains of the insulating material are regulated by the above preparation method of the present application, and the resulting insulating material remains a thermoplastic material without gel formation, not affecting its processing or recycling. The viscosity of the chain-reconstructed insulating material of the present application is also significantly increased, meeting the requirements for the extrusion of thick insulting layers. The melting temperature of the insulating material is higher than 90 °C, eliminating the introduction of elastomers, improving the long-term reliability of the insulating material at working temperatures, and significantly reducing the cost of the insulating material.

In some embodiments, in S2, the ultraviolet irradiation is carried out for a time period in a range from 0.5 s to 10 s. The complexity of the molecular chains can be controlled by controlling the time period for the irradiation. When the ultraviolet irradiation is carried out for a time period in a range from 0.5 s to 10 s, the resulting insulating material not only has low hardness and good low-temperature brittleness, and exhibits excellent mechanical properties and direct current electrical performance, but also avoids gel formation. The insulating material remains thermoplastic, and has the advantages of a thermoplastic material without affecting processing or recycling.

As an example, the ultraviolet irradiation may be carried out for a time period of 0.5 s, 0.6 s, 0.7 s, 0.8 s, 0.9 s, 1.0 s, 1.5 s, 2 s, 2.5 s, 3 s, 3.5 s, 4 s, 4.5 s, 5 s, 5.5 s, 6 s, 6.5 s, 7 s, 7.5 s, 8 s, 8.5 s, 9 s, 9.5 s, or 10 s, or any range defined by any two of the above values as endpoints.

Further, in S2, the ultraviolet irradiation is carried out for a time period in a range from 3 s to 7 s. When the ultraviolet irradiation is carried out for a time period in a range from 3 s to 7 s, the insulating material has excellent stress-strain characteristics, thereby improving the mechanical properties of the insulating material.

Furthermore, in S2, the ultraviolet irradiation is carried out for a time period in a range from 5 s to 7 s. When the ultraviolet irradiation is carried out for a time period in a range from 5 s to 7 s, the stress-strain characteristics are optimal, and the obtained insulating material has better comprehensive properties such as heat resistance, toughness, or direct current electrical performance.

In some embodiments, in S2, a light source of the ultraviolet irradiation has a wavelength of 365 nm and an optical power of 1641 mW/cm². Irradiation with ultraviolet light at this wavelength and optical power can initiate more free radicals, causing the polypropylene phase and the polyethylene phase in the insulating material to be connected more tightly with covalent bonds.

In some embodiments, based on parts by mass, polypropylene is present in an amount of 40 to 90 parts, polyethylene is present in an amount of 10 to 60 parts, the photoinitiator is present in an amount of 0.1 to 0.6 parts, the bridging auxiliary agent is present in an amount of 0.1 to 1.0 parts, the antioxidant is present in an amount of 0.3 to 1.5 parts, and polypropylene and polyethylene are present in a total amount of 100 parts by mass. Within this raw material ratio range, the compatibility between polypropylene and polyethylene is better, and the resulting insulating material has improved heat resistance, toughness, and direct current electrical performance.

As an example, polypropylene may be present in an amount of 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 parts, or in any range defined by any two of the above values as endpoints, preferably 50 to 60 parts.

As an example, polyethylene may be present in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 parts, or in any range defined by any two of the above values as endpoints, preferably 40 to 50 parts.

As an example, the photoinitiator may be present in an amount of 0.1, 0.2, 0.3, 0.4, 0.5, or 0.6 parts, or in any range defined by any two of the above values as endpoints, preferably 0.3 to 0.6 parts.

As an example, the bridging auxiliary agent may be present in an amount of 0.1, 0.2, 0.3, 0.4, 0.5, 0.6, 0.7, 0.8, 0.9, or 1.0 parts, or in any range defined by any two of the above values as endpoints, preferably 0.2 to 0.6 parts.

As an example, the antioxidant may be present in an amount of 0.3, 0.4, 0.5, 0.6, 0.7, 0.8, 0.9, 1.0, 1.1, 1.2, 1.3, 1.4, or 1.5 parts, or in any range defined by any two of the above values as endpoints, preferably 0.3 to 0.5 parts.

In some embodiments, based on parts by mass, polypropylene is present in an amount of 50 to 60 parts, polyethylene is present in an amount of 40 to 50 parts, the photoinitiator is present in an amount of 0.3 to 0.6 parts, the bridging auxiliary agent is present in an amount of 0.2 to 0.6 parts, the antioxidant is present in an amount of 0.3 to 0.5 parts, and polypropylene and polyethylene are present in a total amount of 100 parts by mass. Within this raw material ratio range, the mechanical properties and direct current electrical performance of the insulating material can be further improved.

In some embodiments, the bridging auxiliary agent includes at least one of trimethylolpropane trimethacrylate, ethoxylated trimethylolpropane triacrylate, or triallyl isocyanurate.

In some embodiments, the bridging auxiliary agent includes trimethylolpropane trimethacrylate and ethoxylated trimethylolpropane triacrylate. The carbonyl groups in trimethylolpropane trimethacrylate and ethoxylated trimethylolpropane triacrylate introduce a large number of deep traps into the insulating material, thereby improving direct current electrical performance of the insulating material.

In some embodiments, the bridging auxiliary agent is trimethylolpropane trimethacrylate.

In some embodiments, the photoinitiator includes at least one of benzophenone, 2,4-dihydroxybenzophenone, or Michler's ketone.

In some embodiments, polypropylene includes at least one of polypropylene homopolymer or polypropylene copolymer, and polypropylene has a melt index in a range from 1.8 g/10 min to 2.4 g/10 min at a temperature of 230 °C under a load of 2.16 kg.

In some embodiments, polyethylene includes at least one of low-density polyethylene or linear low-density polyethylene, and polyethylene has a melt index in a range from 1.6 g/10 min to 2.2 g/10 min at a temperature of 190 °C under a load of 2.16 kg.

In some embodiments, the antioxidant includes at least one of Antioxidant 1010, Antioxidant 1035, Antioxidant 1024, or Antioxidant 300.

In some embodiments, the method further includes subjecting the melt-blended mixture to hot press molding at a temperature in a range from 190 °C to 220 °C and a pressure in a range from 5 MPa to 20 MPa, after the melt blending and before the ultraviolet irradiation.

Further, the melt-blended mixture is subjected to hot press molding in a plate vulcanizing machine to obtain a PP blending sheet in a molten state.

In some embodiments, the melt blending is carried out at a temperature in a range from 180 °C to 200 °C.

In some embodiments, a rotating speed of a blending equipment for the melt blending is in a range from 40 r/min to 60 r/min.

In some embodiments, the melt blending is carried out for a time period in a range from 10 min to 20 min.

A second aspect of the present application provides a polypropylene-based insulating material prepared by the method for preparing a polypropylene-based insulating material of the first aspect of the present application.

A third aspect of the present application provides an insulating article including the polypropylene-based insulating material prepared by the preparation method of the first aspect of the present application, or the polypropylene-based insulating material of the second aspect of the present application.

A fourth aspect of the present application provides a cable including the polypropylene-based insulating material prepared by the preparation method of the first aspect of the present application, or the polypropylene-based insulating material of the second aspect of the present application.

Further, a high-voltage cable is provided, including the polypropylene-based insulating material prepared by the preparation method of the first aspect of the present application, or the polypropylene-based insulating material of the second aspect of the present application.

A fifth aspect of the present application provides an electrical apparatus including the high-voltage cable of the fourth aspect.

Examples are described below.

### Example 1

This example provides a polypropylene-based insulating material, the raw materials of which include the following components in parts by mass: 60 parts of polypropylene copolymer (K8003), 40 parts of linear low-density polyethylene (7042), 0.5 parts of a photoinitiator, 0.4 parts of a bridging auxiliary agent, and 0.3 parts of Antioxidant 1010. The polypropylene copolymer (K8003) has a melt index of 2.1 g/10 min at a temperature of 230 °C under a load of 2.16 kg. The linear low-density polyethylene (7042) has a melt index of 1.9 g/10 min at a temperature of 190 °C under a load of 2.16 kg.

The specific procedure of the preparation method was as follows.

The polypropylene copolymer (K8003), the linear low-density polyethylene (7042), the photoinitiator (benzophenone), the bridging auxiliary agent (trimethylolpropane trimethacrylate), and Antioxidant 1010 were uniformly mixed according to the above proportions. The resulting mixture was melt-blended at 190 °C and 60 r/min for 10 min, and then subjected to press molding in a plate vulcanizing machine at 180 °C and 15 MPa to obtain a PP blending test sheet in a molten state. The test sheet was irradiated for 3 s under an ultraviolet irradiation source to achieve a chain regulation reaction of the material.

A polypropylene-based insulating material sample (PP/LLDPE-3s) was obtained.

### Example 2

Example 2 was substantially the same as Example 1, except that the irradiation under the ultraviolet irradiation source was carried out for a time period of 5 s.

A polypropylene-based insulating material sample (PP/LLDPE-5s) was obtained.

### Example 3

Example 3 was substantially the same as Example 1, except that the irradiation under the ultraviolet irradiation source was carried out for a time period of 7 s.

A polypropylene-based insulating material sample (PP/LLDPE-7s) was obtained.

### Example 4

Example 4 was substantially the same as Example 1, except that the amount of polypropylene copolymer (K8003) was 90 parts, and the amount of linear low-density polyethylene (7042) was 10 parts.

### Example 5

Example 5 was substantially the same as Example 1, except that the amount of polypropylene copolymer (K8003) was 40 parts, and the amount of linear low-density polyethylene (7042) was 60 parts.

### Example 6

Example 6 was substantially the same as Example 1, except that the amount of bridging auxiliary agent was 1 part.

### Comparative Example 1

Comparative Example 1 was substantially the same as Example 1, except that the photoinitiator and the bridging auxiliary agent were omitted, and the ultraviolet irradiation was replaced by cooling followed by drying at 80 °C under a vacuum of 10⁻⁴ Pa for 24 h.

A polypropylene insulating sample (PP/LLDPE) was obtained.

### Comparative Example 2

Comparative Example 2 was substantially the same as Example 1, except that the raw materials for preparation were 100 parts of polypropylene copolymer (K8003) and 0.3 parts of an antioxidant, and the ultraviolet irradiation was replaced by cooling followed by drying under vacuum at 80 °C for 24 h.

A polypropylene insulating sample (PP) was obtained.

### Comparative Example 3

Comparative Example 3 was substantially the same as Example 1, except that the photoinitiator was omitted from the raw materials, and the ultraviolet irradiation was omitted.

### Comparative Example 4

Comparative Example 4 was substantially the same as Example 1, except that the bridging auxiliary agent was omitted.

The insulating materials prepared in Examples 1 to 6 and Comparative Examples 1 to 4 were tested for hardness, melt index, gel content, conduction current, and average space charge density. The test results are shown in Table 1 below.

**Table 1**

| No. | Hardness (HD) | Melt Index (g/10min) | Gel Content (%) | Conduction Current at 20kV/mm (A/m²) | Space Charge Density (C/m³) |
|---|---|---|---|---|---|
| Example 1 | 54.0 | 1.46 | 0 | 4.14E-9 | 4.47 |
| Example 2 | 55.0 | 0.67 | 0 | 1.63E-9 | 3.69 |
| Example 3 | 54.5 | 0.32 | 0 | 1.30E-9 | 3.94 |
| Example 4 | 61.5 | 1.37 | 0 | 8.63E-9 | 5.79 |
| Example 5 | 52.1 | 1.67 | 0 | 3.71E-8 | 8.72 |
| Example 6 | 54.5 | 0.43 | 0 | 6.43E-9 | 4.91 |
| Comparative Example 1 | 53.5 | 2.25 | 0 | 5.76E-8 | 11.72 |
| Comparative Example 2 | 63.5 | 2.1 | 0 | 4.98E-8 | 11.43 |
| Comparative Example 3 | 53.5 | 2.34 | 0 | 4.87E-8 | 10.54 |
| Comparative Example 4 | 53.5 | 3.42 | 0 | 6.42E-8 | 11.93 |

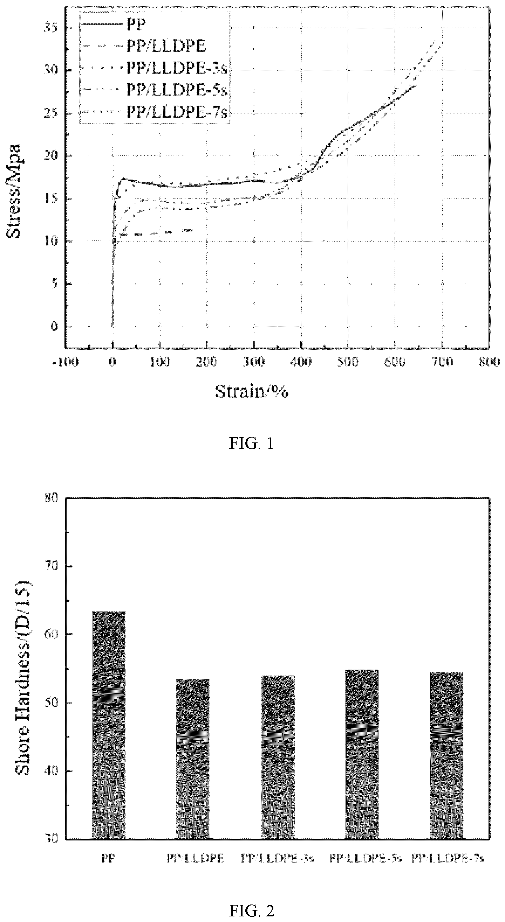

As can be seen from above Table 1 in conjunction with FIGs. 1 and 2, the samples prepared in Examples 1 to 3 and Comparative Examples 1 to 2 were punched into standard dumbbell-shaped samples, which were subjected to stress-strain tests at a pulling speed of 50 mm/min according to the GB/T 1040.2-2006 standard. To eliminate errors in the tests, each of the materials in the examples was tested five times, and the results were averaged. It can be seen from FIG. 1 that the PP material of Comparative Example 2 had good tensile properties, but a relatively high yield strength of about 17.5 MPa, indicating high hardness. In contrast, owing to the weak interphase interaction resulting from differences in crystallization kinetics, the simply blended PP/LLDPE material of Comparative Example 1 exhibited severely deteriorated tensile properties, with its tensile strength and elongation at break decreasing to 11.28 MPa and 169.02%, respectively. The three insulating materials of Examples 1 to 3, i.e., PP/LLDPE-3s, PP/LLDPE-5s, and PP/LLDPE-7s, with chain regulation under ultraviolet irradiation, showed decreased yield strength and significantly improved tensile strength and elongation at break compared to PP/LLDPE. The materials having been irradiated for 5 s and 7 s exhibited the best stress-strain characteristics.

The 4 mm thick samples of Examples 1 to 3 and Comparative Examples 1 to 2 were tested for hardness. The hardness value was read 15 s after the indenter was pressed into the sample. The test results are shown in FIG. 2. It can be seen from FIG. 2 that modifying PP by blending with LLDPE effectively reduced hardness. The hardness of the three ultraviolet-irradiated materials increased slightly compared to PP/LLDPE, which is related to the improved overall homogeneity of the material caused by the fusion of interphase interfaces. The hardness of each of the three materials, i.e., PP/LLDPE-3s, PP/LLDPE-5s, and PP/LLDPE-7s, was about 55 HD.

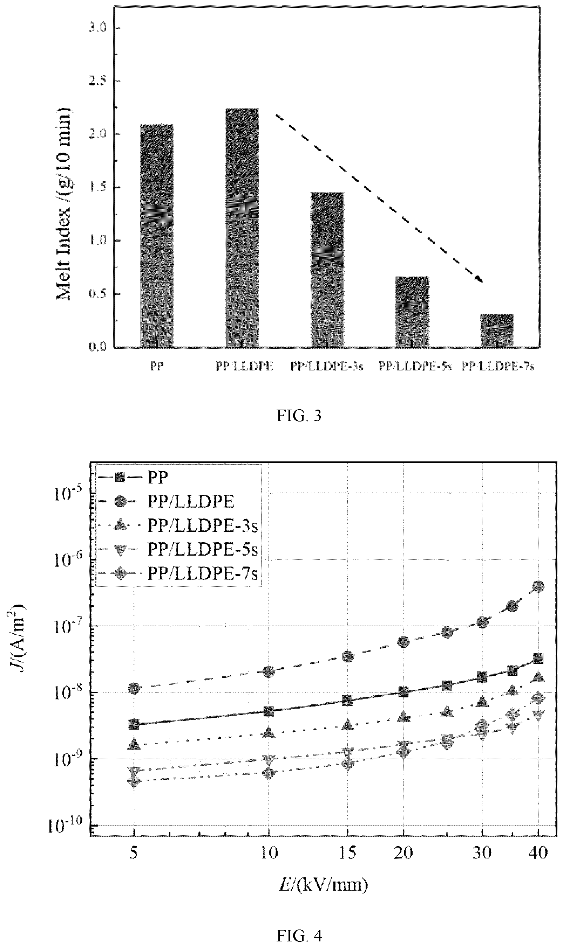

As can be seen from above Table 1 in conjunction with FIG. 3, the melt index test was performed accroding to the ASTM D1238 standard under test conditions of 230 °C and 2.16 kg. The mass of material extruded through a standard orifice over 10 min was recorded. The test results are shown in FIG. 3. It can be seen from FIG. 3 that the melt index of the material decreased as the irradiation time increased. Under the bridging action of the bridging auxiliary agent, LLDPE and PP forms branched chains with each other, enhancing the entanglement between molecular chains in the molten state and achieving a viscosity-increasing effect on the material.

To further investigate the cross-linking state of the insulating materials, Examples 1 to 3 were tested according to the JB/T 10437-2004 standard. Each of the test materials was sealed in a 200-mesh filter screen and extracted in gently boiling xylene for 12 h. Subsequently, the filter screen was vacuum-dried for 24 h to remove xylene. Finally, the sample was weighted, and the gel content was calculated based on the ratio of the dried weight to the original sample weight. To ensure the accuracy of the test results, each material was tested five times. The test results showed that the gel content of the three materials, i.e., PP/LLDPE-3s, PP/LLDPE-5s, and PP/LLDPE-7s, was zero, confirming that no gel was generated within the materials during the chain regulation process induced by ultraviolet irradiation, and further confirming the controllability of the ultraviolet irradiation process.

As can be seen from above Table 1 in conjunction with FIG. 4, the samples prepared in Examples 1 to 3 and Comparative Examples 1 to 2 were subjected to direct current resistivity and dielectric strength tests. The direct current resistivity test was conducted at room temperature using a three-electrode system. Each sample was polarized under a 5 kV/mm stepwise voltage increase for 15 min, and the conduction current flowing through the sample was read. It can be seen from FIG. 4 that the blended PP/LLDPE introduced a large number of interfaces, providing numerous pathways for charge carrier transport. Therefore, the conduction current of the blended PP/LLDPE was approximately doubled compared to the PP material. The conduction currents of the three chain-regulated insulating materials, PP/LLDPE-3s, PP/LLDPE-5s, and PP/LLDPE-7s, all decreased to varying degrees. This is related to the improved dispersibility of the materials and the reduced interphase spacing. Additionally, the carbonyl groups in the auxiliary agent were grafted into the materials during the ultraviolet irradiation process, introducing deep trap energy levels, greatly reducing carrier mobility and effectively lowering the conduction current of the materials. For the PP/LLDPE-7s material irradiated for 7 s, the conduction current under high electric fields was higher than that of PP/LLDPE-5s, which may be due to the degradation of the PP material induced by the increased irradiation dose, leading to an increased conduction current.

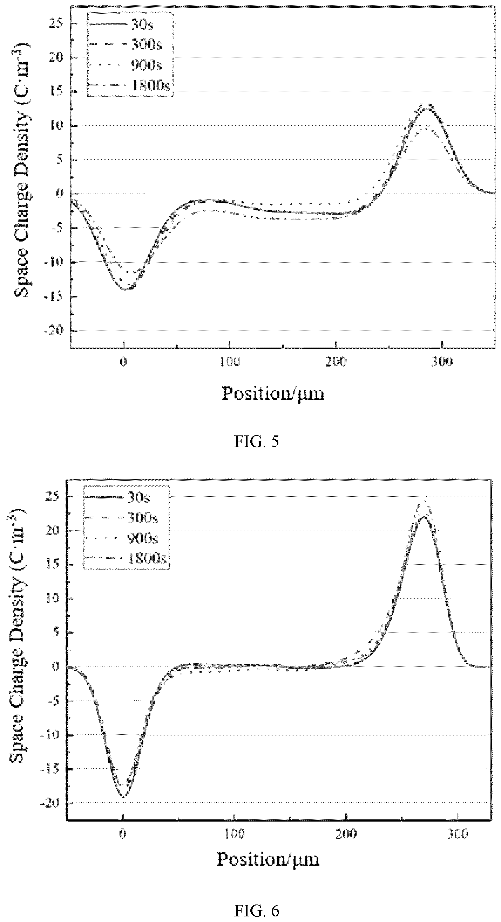

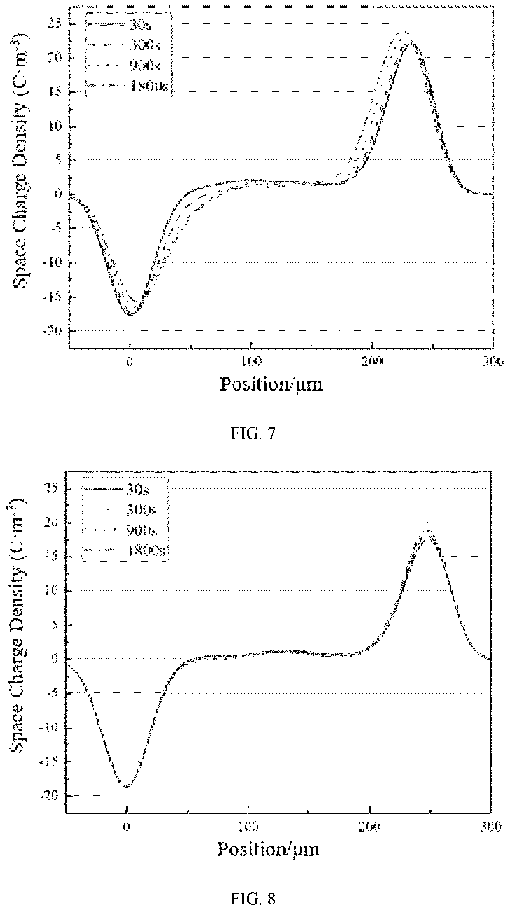

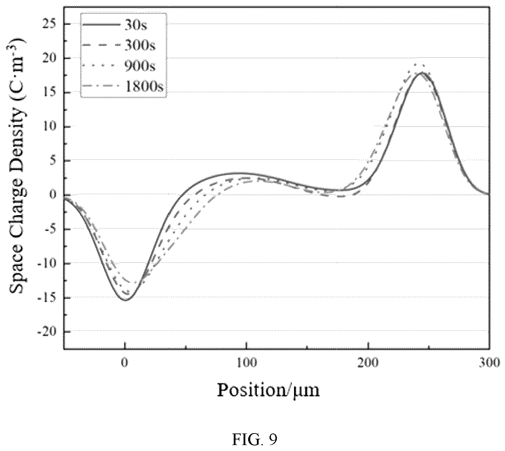

As can be seen from above Table 1 in conjunction with FIGs. 5 to 9, the samples prepared in Examples 1 to 3 and Comparative Examples 1 to 2 were subjected to space charge distribution test. The test was performed using the pulsed electro-acoustic (PEA) method at a temperature of 30 °C. Each sample was polarized under a direct current electric field of 40 kV/mm for 30 min. The space charge distribution in each test sample at the final moment of polarization is shown in FIGs. 5 to 9. It can be seen from FIG. 9 that introducing LLDPE into PP resulted in more severe accumulation of space charges in the material. The maximum charge accumulation in the PP sample was about 1.37 C/m³. In contrast, the PP/LLDPE sample exhibited significant charge injection on the cathode side, with the injection depth gradually increasing over the duration of voltage application. At the final moment of voltage application, about 2.18 C/m³ of space charges accumulated in the middle of the sample. The PP/LLDPE-3s sample irradiated for 3 s exhibited evident cathode injection characteristics, with still relatively severe charge accumulation and injection phenomena. By further increasing the irradiation time to 5 s, the space charge distribution characteristics of the material are significantly improved due to the improved interphase interfaces and dispersibility. In the 30 min high-voltage test, the space charge accumulation within the PP/LLDPE-5s sample was below 1 C/m³. However, compared to PP/LLDPE-5s, the PP/LLDPE-7s sample irradiated for 7 s showed slight deterioration, with noticible homopolar charge injection occurring on both the cathode and anode sides, and the maximum charge accumulation within the sample was about 1.86 C/m³.

The technical features in the above embodiments may be arbitrarily combined. For concise description, not all possible combinations of the technical features in the above embodiments are described. However, all the combinations of the technical features are to be considered as falling within the scope described in this specification provided that they do not conflict with each other.

The above embodiments only describe several implementations of the present application, and the description thereof is specific and detailed, but cannot therefore be understood as a limitation on the scope of the present application. It should be noted that, for those skilled in the art, several modifications and improvements may be made without departing from the inventive concept of the present application, which are within the protection scope of the present application. Therefore, the protection scope of the present application should be subject to the appended claims.

## Claims

1. A method for preparing a polypropylene-based insulating material, comprising:
S1: melt blending polypropylene, polyethylene, a photoinitiator, a bridging auxiliary agent, and an antioxidant; and
S2: subjecting the melt-blended mixture to chain regulation under ultraviolet irradiation to obtain the polypropylene-based insulating material.

2. The method according to claim 1, wherein in S2, the ultraviolet irradiation is carried out for a time period in a range from 0.5 s to 10 s.

3. The method according to any one of claims 1 to 2, wherein based on parts by mass, polypropylene is present in an amount of 40 to 90 parts, polyethylene is present in an amount of 10 to 60 parts, the photoinitiator is present in an amount of 0.1 to 0.6 parts, the bridging auxiliary agent is present in an amount of 0.1 to 1.0 parts, the antioxidant is present in an amount of 0.3 to 1.5 parts, and polypropylene and polyethylene are present in a total amount of 100 parts by mass.

4. The method according to any one of claims 1 to 3, wherein based on parts by mass, polypropylene is present in an amount of 50 to 60 parts, polyethylene is present in an amount of 40 to 50 parts, the photoinitiator is present in an amount of 0.3 to 0.6 parts, the bridging auxiliary agent is present in an amount of 0.2 to 0.6 parts, the antioxidant is present in an amount of 0.3 to 0.5 parts, and polypropylene and polyethylene are present in a total amount of 100 parts by mass.

5. The method according to any one of claims 1 to 4, wherein the bridging auxiliary agent comprises at least one of trimethylolpropane trimethacrylate, ethoxylated trimethylolpropane triacrylate, or triallyl isocyanurate.

6. The method according to any one of claims 1 to 5, wherein the photoinitiator comprises at least one of benzophenone, 2,4-dihydroxybenzophenone, or Michler's ketone.

7. The method according to any one of claims 1 to 6, wherein polypropylene comprises at least one of polypropylene homopolymer or polypropylene copolymer, and polypropylene has a melt index in a range from 1.8 g/10 min to 2.4 g/10 min at a temperature of 230 °C under a load of 2.16 kg.

8. The method according to any one of claims 1 to 7, wherein the polyethylene comprises at least one of low-density polyethylene or linear low-density polyethylene, and polyethylene has a melt index in a range from 1.6 g/10 min to 2.2 g/10 min at a temperature of 190 °C under a load of 2.16 kg.

9. The method according to any one of claims 1 to 8, further comprising subjecting the melt-blended mixture to hot press molding at a temperature in a range from 190 °C to 220 °C and a pressure in a range from 5 MPa to 20 MPa after the melt blending and before the ultraviolet irradiation.

10. The method according to any one of claims 1 to 9, wherein the melt blending is carried out at a temperature in a range from 180 °C to 200 °C.

11. The method according to any one of claims 1 to 10, wherein a rotating speed of a blending equipment for the melt blending is in a range from 40 r/min to 60 r/min.

12. The method according to any one of claims 1 to 11, wherein the melt blending is carried out for a time period in a range from 10 min to 20 min.

13. A polypropylene-based insulating material prepared by the method according to any one of claims 1 to 12.

14. An insulating article comprising the polypropylene-based insulating material prepared by the method according to any one of claims 1 to 12, or the polypropylene-based insulating material according to claim 13.

15. A cable comprising the polypropylene-based insulating material prepared by the method according to any one of claims 1 to 12, or the polypropylene-based insulating material according to claim 13.
